(19) Europäisches Patentamt
European Patent Office
Office européen des brevets

(11) **EP 4 464 811 A1**

(12) **EUROPEAN PATENT APPLICATION**
published in accordance with Art. 153(4) EPC

(43) Date of publication:
**20.11.2024 Bulletin 2024/47**

(21) Application number: **23740007.2**

(22) Date of filing: **10.01.2023**

(51) International Patent Classification (IPC):
*C22C 38/02* (2006.01)    *B21D 22/00* (2006.01)

(52) Cooperative Patent Classification (CPC):
**B21D 22/00; C22C 38/02; C23C 2/06**

(86) International application number:
**PCT/CN2023/071554**

(87) International publication number:
**WO 2023/134665 (20.07.2023 Gazette 2023/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.01.2022 CN 202210025589**

(71) Applicant: BAOSHAN IRON & STEEL CO., LTD.
**Shanghai 201900 (CN)**

(72) Inventors:
• **BI, Wenzhen**
  **Shanghai 201900 (CN)**
• **WANG, Kai**
  **Shanghai 201900 (CN)**
• **SHI, Liangquan**
  **Shanghai 201900 (CN)**
• **JIN, Xinyan**
  **Shanghai 201900 (CN)**

(74) Representative: **Kuhnen & Wacker**
**Patent- und Rechtsanwaltsbüro PartG mbB**
**Prinz-Ludwig-Straße 40A**
**85354 Freising (DE)**

(54) **HOT STAMPED STEEL PLATE WITH AL-ZN-MG-SI PLATING AND HOT STAMPING METHOD THEREFOR**

(57) Disclosed in the present invention are a hot stamped steel plate with Al-Zn-Mg-Si plating and a hot stamping method therefor; before hot stamping, the initial structure of the Al-Zn-Mg-Si plating is composed of a Zn-rich phase, an Al-rich phase, a $MgZn_2$ phase, an $MgSi_2$ phase, and a Fe-Al-Si alloy layer; after hot stamping, when the heat preservation time of the plating structure is t<3 min, the plating is composed of an upper and lower layer, the structure of the first layer being composed of an Al-rich phase, a Zn-rich phase, and an $MgZn_2$ phase, and the volume percentage ratio of the sum of the Zn phase and the $MgZn_2$ phase is between 20% and 80%; the structure of the second layer is composed of an $FeAl_3$ phase and a Zn-rich phase, and the volume percentage ratio of the Zn-rich phase does not exceed 5%; when the heat preservation time is t>3 min, the plating is composed of a single-layer alloy layer, and the alloy layer is mostly composed of a $FeAl_3$ phase, wherein a Zn-rich phase and an $MgZn_2$ phase are present between the $FeAl_3$ phase, and the volume percentage ratio of the sum of the Zn phase and the $MgZn_2$ phase is 5-50%; and also relating to a hot stamping method. In the steel plate of the present invention, after hot stamping the plating has good corrosion resistance, and cracks on the substrate caused by liquid metal brittleness can be avoided.

Fig. 2

EP 4 464 811 A1

**Description**

**Technical Field**

The present disclosure relates to the technical field of thermal forming, in particular to a hot stamped steel plate with an Al-Zn-Mg-Si clad layer and a hot stamping method therefor.

**Background Art**

Automobile lightweight technology is one of the key technologies to adapt to the trend of safety, energy saving and environmental protection of modern automobiles. For the stamping and forming process, thinning and high strength are the dual factors that deteriorate the formability, which not only makes the body parts easy to crack during the forming process, but also easy to produce excessive resilience, which affects the subsequent assembly of the body. One of the ways to achieve the high strength of the final part is through heat treatment, and the hot stamping technology is a way to achieve the high strength of the part through the combination of heat treatment and high temperature forming, which can solve the contradiction between high strength and cold forming better.

The parts produced by thermal forming technology have the advantages of ultra-high strength, high molding accuracy, and no resilience. More and more auto body parts, such as A-pillars, B-pillars, automobile bumpers, anti-collision beams, door anti-collision beams, etc., are using thermal forming technology. The traditional hot-stamped parts without any clad layer will cause decarburization and oxidized scaling on the surface of the stamped steel plate during the heating process. In order to avoid oxidation and decarburization on the surface of the hot-stamped steel plate, and to impart high temperature resistance and corrosion resistance to the hot-stamped steel plate, the plating technology suitable for hot-stamped steel has been developed. At present, hot-stamped clad layer mainly comprises aluminum-silicon (Al-10Si) clad layer, hot-dip galvanized zinc (GI) clad layer, alloyed zinc-iron (GA) clad layer and electroplated zinc-nickel (Zn-10Ni) clad layer.

In the direct hot stamping process, the hot stamped steel with zinc-based clad layer, which can provide cathodic corrosion protection, may have microcracks (10um to 100um) in the steel plate matrix due to the action of liquid metal brittleness (LME), and even macrocracks that extend in the entire plate thickness direction. Thus, the application and development of the hot stamped steel with zinc-based clad layer are hindered. The current widely used aluminum/silicon clad layer cannot provide cathodic corrosion protection. In order to further improve the corrosion resistance of the clad layer, galvanized materials are also developed from pure zinc to zinc alloy. Since three patent applications GB1125965A, US3505043A and US3505042A for the addition of Al and Mg in an appropriate amount in Zn to further improve the corrosion resistance were proposed by Inland Steel, various development and research on the steel plate with Zn-Al-Mg based clad layer have been carried out, which mainly focus on blending various other added elements, or limiting the production process parameters to further improve the corrosion resistance or facilitate the manufacture and reduce production costs.

In addition, a steel with a Zn-Al-Mg-Si alloy clad layer having excellent corrosion resistance and the method for manufacturing the same are proposed in CN100334250, which mainly relates to the control of the content of Mg and Si added to the Zn-Al based clad layer, and the control of the precipitated amount and precipitated morphology of the MgSi$_2$ phase having the effect of improving corrosion resistance. It can not only solve the problem of edge creep resistance of the cutting section after coating, but also provide an alloy clad layer with extremely excellent performance. The patent CN103805930B studies the distribution of Cr in the interface alloy layer by adding Mg and/or Cr to Galvalume clad layer (Zn-55Al), and provides a hot-dipped steel plate with a Zn-Al-Mg-Cr clad layer having excellent processing performance and corrosion resistance. However, the above existing technologies are only for the Zn-Al-Mg clad layer used in the cold-formed steel plate, and there is no research on the hot stamped steel plate with Al-Zn-Mg-Si clad layer and the hot stamping method therefor at present.

**Summary**

One object of the present disclosure is to provide a hot-stamped steel plate with an Al-Zn-Mg-Si clad layer and a hot-stamping method therefor. The hot-stamped parts made by the method of the present disclosure have excellent corrosion resistance, and can effectively avoid the substrate cracks caused by local stress and liquid metal brittleness (LME) in the hot stamping and forming process of steel plate with an Al-Zn-Mg-Si clad layer.

To achieve the above object, the technical solution of the present disclosure is as follows:

A hot-stamped steel plate with an Al-Zn-Mg-Si clad layer which comprises a substrate and an Al-Zn-Mg-Si clad layer plated on the substrate, wherein the Al-Zn-Mg-Si clad layer is composed of two structures in the thickness direction, namely, an oxide layer of the surface layer and an alloy layer under the surface layer, wherein the alloy layer has a thickness of 15~45um, and the alloy layer is composed of an upper layer and a lower layer structure, wherein the first layer of structure is composed of an Al-rich phase, a Zn-rich phase, a $MgZn_2$ phase and a $FeAl_3$ phase, and the volume percentage of the sum of the Zn-rich phase and the $FeAl_3$ phase is between 20% and 80%; wherein the second layer of structure is composed of a $FeAl_3$ phase, a $MgZn_2$ phase and a Zn-rich phase, and the volume percentage of the $MgZn_2$ phase and the Zn-rich phase does not exceed 5%; or wherein the alloy layer is composed of a single alloy layer which mainly comprises a $FeAl_3$ phase as well as a Zn-rich phase and a $MgZn_2$ phase in the $FeAl_3$ phase, and the volume percentage of the sum of the Zn-rich phase and the $MgZn_2$ phase is 5%~50%.

In some embodiments, the alloy layer is composed of an upper layer and a lower layer structure, wherein the first layer of structure is composed of Al-rich phase, Zn-rich phase, $MgZn_2$ phase and $FeAl_3$ phase, and the volume percentage of the sum of the Zn-rich phase, the $MgZn_2$ phase and the $FeAl_3$ phase is between 50% and 100%; wherein the second layer of structure is composed of a $FeAl_3$ phase, a $MgZn_2$ phase and a Zn-rich phase, and the volume percentage of the $MgZn_2$ phase and the Zn-rich phase does not exceed 5%.

In some embodiments, the alloy layer is composed of a single alloy layer which mainly comprises a $FeAl_3$ phase as well as a Zn-rich phase and a $MgZn_2$ phase in the $FeAl_3$ phase, and the volume percentage of the sum of the Zn-rich phase and the $MgZn_2$ phase is 15%~40%.

In some embodiments, the present disclosure provides a hot-stamped steel plate with an Al-Zn-Mg-Si clad layer which comprises a substrate and an Al-Zn-Mg-Si clad layer plated on the substrate, after the Al-Zn-Mg-Si clad layer is hot-stamped, the Al-Zn-Mg-Si clad layer is composed of two structures in the thickness direction, namely, the oxide layer of the surface layer and the lower alloy layer with a thickness of 15~45um, wherein the microstructure of the alloy layer has a relationship with the holding time t in the austenitization process as follows:

(1) when the holding time t is ≤3min, the alloy layer of the Al-Zn-Mg-Si clad layer is composed of an upper layer and a lower layer, wherein the first layer is composed of an Al-rich phase, a Zn-rich phase and a $FeAl_3$ phase, and the volume percentage of the sum of the Zn-rich phase and the $FeAl_3$ phase is between 20% and 80%; wherein the second layer is composed of a $FeAl_3$ phase and a Zn-rich phase, and the volume percentage of the Zn-rich phase does not exceed 5%;

(2) when the holding time t is >3min, the alloy layer of the Al-Zn-Mg-Si clad layer is composed of a single alloy layer which mainly comprises a $FeAl_3$ phase as well as a Zn-rich phase and a $MgZn_2$ phase in the $FeAl_3$ phase, and the volume percentage of the sum of the Zn-rich phase and the $MgZn_2$ phase is 5%~50%.

In the hot-stamped steel plate with an Al-Zn-Mg-Si clad layer of the present disclosure, the initial structure of the Al-Zn-Mg-Si clad layer of the steel plate before hot stamping is composed of a Zn-rich phase, an Al-rich phase, a $FeAl_3$ phase, a $MgSi_2$ phase and a Fe-Al-Si alloy layer, and the thickness of the Al-Zn-Mg-Si clad layer is 8-30um.

In the hot-stamped steel plate with an Al-Zn-Mg-Si clad layer of the present disclosure, the steel plate has an oxide layer containing oxides of Zn, Al, Mg, Si on the surface of the clad layer after hot stamping, and the thickness of the oxide layer of the Al-Zn-Mg-Si clad layer is no more than 3um, such as 0.5~3um.

In the hot-stamped steel plate with an Al-Zn-Mg-Si clad layer of the present disclosure, the Al-Zn-Mg-Si clad layer has a composition based on mass percentage of Al: 45-65%, Mg: 0.2-5%, Si: 0.1-3%, and a balance of Zn and other unavoidable impurities.

In the hot-stamped steel plate with an Al-Zn-Mg-Si clad layer of the present disclosure, the Al-Zn-Mg-Si clad layer has a composition based on mass percentage of Al: 45-65%, Mg: 0.2-5%, Si: 0.5-3%, and a balance of Zn and other unavoidable impurities.

In the hot-stamped steel plate with an Al-Zn-Mg-Si clad layer of the present disclosure, the substrate has a composition based on mass percentage of C: 0.1%~0.5%; Si: 0.05%~2.0%; Mn: 0.5%~3.0%; P: ≤0.1%; S: ≤0.05%; Al: 0.01-0.05%; N: 0.01% or less; and further comprises at least one of Nb: 0.01%~0.1%, V: 0.01%~1.0%, Mo: 0.01%~1.0%, Ti: 0.01%~0.1%, Cr: 0.01%~1.0%, Ni: 0.01%~1.0% and B: 0.001%~0.01%, and a balance of Fe and other unavoidable impurities.

In some embodiments, in the hot-stamped steel plate with an Al-Zn-Mg-Si clad layer of the present disclosure, the substrate has a composition based on mass percentage of C: 0.1%~0.3%; Si: 0.05-0.3%; Mn: 0.8-1.5%; P: ≤0.01%; S: ≤0.0005%; Al: 0.01-0.05%; N: 0.01% or less; and further comprises at least one of Nb: 0.01%~0.1%, V: 0.01%~1.0%, Mo: 0.01%~1.0%, Ti: 0.01%~0.1%, Cr: 0.1-0.4%, Ni: 0.01%~1.0%, B: 0.001%~0.01%, and a balance of Fe and other unavoidable impurities.

In some embodiments, in the hot-stamped steel plate with an Al-Zn-Mg-Si clad layer of the present disclosure, the substrate has a composition based on mass percentage of C: 0.1%~0.3%, Si: 0.05-0.3%, Mn: 0.8-1.5%, P: ≤0.01%, S: ≤0.0005%, Al: 0.01-0.05%, N: 0.01% or less, Ti: 0.01%~0.1%, Cr: 0.1-0.4% and B: 0.001%~0.01%, and a balance of Fe and other unavoidable impurities.

The compositional design of each chemical element in the steel plate according to the present disclosure is as follows:

C: 0.1%~0.5%

The C content is the most important factor that determines the strength and hardness of the steel plate. The strength and hardness of the steel plate increase with the increase of the C content. The plasticity and toughness of the steel plate decrease with the increase of the C content. And the cold brittleness tendency and aging tendency of the steel plate increase with the increase of the C content. And the C content also has a significant effect on the mechanical properties after quenching of the steel. So the upper limit of the C content is set at 0.5%, preferably 0.35%, so as to ensure that the steel plate has a certain plasticity and toughness. The lower limit is set at 0.1% to ensure that the steel plate has a certain strength. In some embodiments, the C content is 0.1-0.3%.

Si: 0.05%~2.0%

Si is a substitutional solid solution alloy element that can promote the enrichment of C in austenite, so as to increase the stability of austenite, improve the strength of the steel plate, and improve its toughness to a certain extent. Therefore, in the present disclosure, the lower limit of Si content is set at 0.05%. But when the Si content is great, the probability of surface defects in red iron oxide scale during hot rolling increases and the rolling force increases, resulting in ductility deterioration of hot-rolled steel plates. Therefore, the upper limit of Si content is set at 1.0% in the present disclosure. In order to ensure the platability of the steel plate, the upper limit of Si is preferably 1.0%. In some embodiments, the Si content is 0.05-0.5%. In some embodiments, the Si content is 0.05-0.3%.

Mn: 0.5%~3.0%

Mn is an element that improves the hardenability of the steel plate, expands the austenite phase zone and effectively ensures the strength of the steel plate after quenching. At the same time, Mn, as an element that expands the austenite phase zone, can reduce the temperature of Ac3 and Ac1, delay the pearlite phase transformation, and thus reduce the heating temperature of hot stamping. Ac3 refers to the actual phase change temperature when the carbon steel is heated, and Ac1 is the temperature at which the austenite begins to form when the steel is heated. When the Mn content is less than 0.5%, the ability to improve the hardenability of the steel plate is insufficient. On the other hand, the Mn content exceeding 3% will lead to segregation, resulting in a decrease in performance uniformity of the steel plate matrix and hot-stamped parts. In some embodiments, the Mn content is 0.5-2.0%. In some embodiments, the Mn content is 0.8-1.5%.

P: ≤0.1%

P causes the significant reduction of plasticity and toughness of the steel. Especially at low temperature, it will lead to the phenomenon of "cold brittleness". So it should be strictly controlled and limited to be not greater than 0.1%. In some embodiments, P: ≤0.01%.

S: ≤0.05%

The S content is kept at a low level. The S content is limited to be not greater than 0.05% because of the thermal brittleness problem caused by the formation of FeS from S. The lower limit is not defined, because for the same reason the lower the S content, the better. In some embodiments, S: ≤0.0005%.

N: ≤0.01%

When the N content exceeds 0.01%, AlN nitride will be formed during hot rolling, resulting in the reduction of punching performance and hardenability of the steel plate. Therefore, the lower the N content, the better. The N content is set at ≤0.01%. In some embodiments, N: ≤0.005%.

Al: 0.01%~0.05%

Al has an effect of deoxygenation. When the content of Sol.Al (effective Al) is < 0.01%, the addition effect is not obvious. When the Sol.Al content is > 0.05%, the deoxygenation effect is saturated and the cost increases. Therefore, the Al content is controlled at 0.01%~0.05% in the present disclosure.

Nb: 0.01%~0.1%

Nb is an important microalloying element in steel. The addition of a trace amount of Nb to the steel can ensure the grain refinement through the dispersed precipitation of carbide and nitride mass points (having a size of less than 5nm) and the solid solution of Nb under the condition of low carbon equivalent, which greatly improves the strength and toughness, especially the low-temperature toughness, of the steel and imparts good cold bending performance and weldability to the steel. Therefore, in the present disclosure, the Nb content is controlled at 0.01%~0.1%, which can effectively refine the original austenite grains of the steel substrate, for the purpose of improving the toughness and cold bending properties of the parts after thermal forming.

V: 0.01%~1.0%

V is an element that refines the structure by forming carbides. When the steel plate is heated to a temperature above Ac3, the fine carbide of V inhibits recrystallization and grain production, resulting in the refinement of austenite grains and the improvement of toughness. When the V content is < 0.01%, the addition effect is not obvious. When the V content is > 1.0%, the addition effect is saturated and the cost increases.

Mo: 0.01%~1.0%

Like V, Mo is an austenite refinement element. When the Mo content is < 0.01%, the addition effect is not obvious. When the Mo content is > 1.0%, the addition effect is saturated and the cost increases.

B: 0.001%~0.01%

B is an element with severe grain boundary segregation in steel, which can reduce the grain boundary energy of austenite and inhibit the formation of pre-eutectic ferrite crystal nuclei. It has three characteristics for improving the hardenability of steel: the ability to improve hardenability is very strong; a trace amount of B element is equivalent to the addition of a variety of other precious alloying elements; element B has a best content to improve hardenability and the content is very small, unlike the general alloying elements, for which the effect of improving hardenability increases with the increase of its content in steel. Therefore, the B content is controlled at 0.001%~0.01% in the present disclosure.

In the present disclosure, the chemical composition of the substrate of the steel plate may further comprises at least one of Ti: 0.01%~0.1%, Cr: 0.01%~1.0%, Ni: 0.01%~1.0%.

Ti: 0.01%~0.1%

Ti is an element that can be used effectively because it ensures the stable effect of the above-mentioned B through the formation of Ti nitride. For this purpose, the added amount of 0.01% or more is necessary. But if too much nitride is added, the excessive nitride will lead to deterioration of toughness. So the upper limit of Ti is set at 0.10%.

Cr: 0.01%~1.0%

Cr can increase the hardenability of steel and has a secondary hardening effect. Chromium forms a continuous solid solution with iron, which reduces the austenite phase region. Chromium can also reduce the carbon concentration of pearlite and the solubility limit of carbon in austenite. Chromium can also improve the oxidation resistance and corrosion resistance of steel. When the Cr content is < 0.01%, the addition effect is not obvious. When the Cr content is > 1.0%, the addition effect is saturated and the cost increases. In some embodiments, the Cr content is 0.1-0.5%, such as 0.1-0.4%.

Ni: 0.01%~1.0%

Ni can expand the austenite region of steel and Ni is the main alloying element for the formation and stabilization of austenite. Nickel can also strengthen the ferrite and refine and increase the pearlite, thereby improving the strength of the steel. The addition effect is obvious when the Ni content is 0.01% or more. Because it is a high-priced element, it is controlled at 1.0% or less.

The present disclosure also relates to a hot stamping method suitable for the hot stamped steel plate with an Al-Zn-Mg-Si clad layer, so that the steel plate is austenitized, then subjected to hot stamping and in-mold quenching within a limited process range, and the hot stamped parts have good corrosion resistance, and at the same time the substrate crack caused by local stress and liquid metal brittleness in the hot forming process is avoided. The operation steps of this hot stamping method are as follows:

(1) heating: delivering the steel plate with an Al-Zn-Mg-Si clad layer to a heating furnace, wherein the steel plate is heated to a temperature $T_{Ac3}$ which is higher than Ac3 at a heating rate V greater than or equal to 5°C/s and less than or equal to 1000°C/s, and wherein the heating temperature T is required to satisfy the following relation:

$$T_{Ac3} < T < 1.03 T_{Ac3} + 2 \times \frac{[Al]}{[Zn]} \times V$$

wherein [Al] is the Al content % in the clad layer, [Zn] is the Zn content % in the clad layer, V is the heating rate in a unit of °C/s during heating;

(2) holding: holding the austenitized steel plate, wherein the holding time t is set to satisfy the following equation:

$$1 < t < 2.7 \times \frac{[Al]}{[Zn]}$$

wherein [Al] is the Al content % in the clad layer, [Zn] is the Zn content % in the clad layer, in a unit of min;

(3) hot stamping and in-mold quenching: quickly moving the heated steel plate to a hot stamping mold for stamping and quenching, wherein a blank is formed after the hot stamping is completed, and the blank is first hardened and cooled in the mold, and then cooled to room temperature in the mold, or cooled to room temperature after being removed from the mold.

In the hot stamping method suitable for the hot stamped steel plate with an Al-Zn-Mg-Si clad layer of the present disclosure, the heating rate V in Step (1) is greater than 5°C/s and less than 1000°C/s.

In the hot stamping method suitable for the hot stamped steel plate with an Al-Zn-Mg-Si clad layer of the present disclosure, the heating rate V in Step (1) is 5~200°C/s. In some embodiments, the heating rate V is 5~50°C/s. In some embodiments, the heating rate V is 10~50°C/s.

In the hot stamping method suitable for the hot stamped steel plate with an Al-Zn-Mg-Si clad layer of the present disclosure, the austenitization temperature of the steel plate in Step (1) is controlled at 930 °C or less, and higher than the Ac3 temperature.

In the hot stamping method suitable for the hot stamped steel plate with an Al-Zn-Mg-Si clad layer of the present disclosure, the holding time for austenitization of the steel plate in Step (2) is controlled between 1 min and 7 min.

In the hot stamping method suitable for the hot stamped steel plate with an Al-Zn-Mg-Si clad layer of the present disclosure, the holding time in Step (2) is controlled at more than 1 min and less than 3 min. That is, in a preferred embodiment, the holding time is controlled at more than 1 min and less than 3 min.

In the hot stamping method suitable for the hot stamped steel plate with an Al-Zn-Mg-Si clad layer of the present disclosure, the stamping force of the hot stamping in Step (3) is 300~1000 tons, and the holding time is 3~15 seconds.

In some embodiments, the hot stamping method suitable for the hot stamped steel plate with an Al-Zn-Mg-Si clad layer of the present disclosure is used for the manufacture of the hot stamped steel plate with an Al-Zn-Mg-Si clad layer according to any one of the embodiments described herein.

In some embodiments, the hot stamping method suitable for the hot stamped steel plate with an Al-Zn-Mg-Si clad layer of the present disclosure further comprises a step for preparing the hot-stamped steel plate with an Al-Zn-Mg-Si clad layer with a method comprising the following steps:

1) smelting the raw material for producing the steel plate;

2) providing a casting billet by continuous casting;

3) hot rolling: the rolling is controlled after the casting billet is heated to 1100~1250 °C, wherein the initial rolling temperature is 950~1150 °C, the final rolling temperature is 750~900 °C, and the thickness of the hot-rolled plate is less than or equal to 20mm;

4) coiling at 500~850°C after rolling, wherein the structure is ferrite and pearlite after it is cooled to room temperature;

5) pickling to remove the iron oxide scale produced during hot rolling;

6) cold rolling: wherein the steel coil is cold rolled to a thickness of 2.0mm or less, and the cold rolling reduction rate is $\geq$ 35%;

7) continuous annealing and hot dipping: the resulting cold rolled strip steel without annealing is uncoiled, washed, heated to a soaking temperature of 780~850°C and held for 30~200s, wherein the heating rate is 1~20°C/s, the atmosphere of the heating section and the holding section is a mixed gas of $N_2$ and $H_2$, wherein the volume content of $H_2$ is 0.5-20%, and the dew point of the annealing atmosphere is -40-10 °C; then the steel plate is immersed in a zinc pot for hot-dipping, wherein the bath temperature is in the range of 565~605°C; the steel plate is cooled in stages after it leaves the bath to obtain a plated steel plate. That is, the substrate is plated with an Al-Zn-Mg-Si clad layer.

Preferably, the cooling in stages include: in the range of the temperature at which it leaves the bath to 480°C, the cooling rate of the steel plate is controlled at 15~25°C/s; in the range of 480~280°C, the cooling rate of the steel plate is controlled at 40~60°C/s; after it is cooled to 280°C or lower, the steel plate is cooled to room temperature in a water quenching tank.

Based on the above-mentioned technical solution, the hot-stamped steel plate with an Al-Zn-Mg-Si clad layer of the present disclosure and the hot-stamping method have the following beneficial effects in practice:

1. The present disclosure provides a hot-stamping forming method for the hot-stamped steel plate with an Al-Zn-Mg-Si clad layer. The hot-stamped parts have good corrosion resistance with the specified process range. Because Al-Fe diffusion will occur first in the heating process, the Zn-rich phase ($\eta$-Zn) and MgZn2 phase in the initial clad layer will concentrate in the surface layer at 1/3~1/2 thickness of the clad layer, which is composed of Zn-rich phase ($\eta$-Zn), $MgZn_2$ phase and Al-rich phase. The interface layer is a double-layer alloy phase structure composed of $AlFe_3$ phase. In the corrosive medium, due to the lower potential of the Zn-rich phase or $MgZn_2$ phase in the surface layer, it can form a galvanic cell with the interface alloy layer or the matrix, so as to play a role of sacrificial anode protection for the matrix.

2. The present invention provides a hot-stamping and forming method for the hot-stamped steel plate with an Al-Zn-Mg-Si clad layer. Within the scope of the process specified by the present disclosure, the substrate crack caused by liquid metal embrittlement (Liquid Metal Embrittlement, LME) can be avoided, and it also imparts good corrosion resistance to the hot-stamped clad layer.

3. With respect to the hot-stamped steel plate with an Al-Zn-Mg-Si clad layer of the present disclosure, Al-Fe diffusion will first occur in the heating process, and the Zn-rich phase ($\eta$-Zn) and $MgZn_2$ phase in the initial clad layer will concentrate in the surface layer at 1/3~1/2 thickness of the clad layer. But if the heating temperature is too high, due to the driving force of Zn-Fe diffusion after Al-Fe is fully diffused, the Zn-rich phase in the clad layer will diffuse into the grain boundary of $AlFe_3$ phase. In the mold forming process, since the Zn-rich phase with low melting point is still in a liquid state, the binding force of AlFe$_3$ phase will be reduced under the action of stress, resulting in macroscopic cracks caused by liquid metal brittleness. Thus, the heating temperature is set at $1.03T_{Ac3}+2\times V\times$[Al]/[Zn] or less.

4. With respect to the hot-stamped steel plate with an Al-Zn-Mg-Si clad layer of the present disclosure, the holding time of the steel plate for hot stamping and forming is limited in detail. If the holding time is less than 1 min, the steel plate cannot be completely austenitized. If the holding time is too long, the clad layer will convert to a single alloy layer structure with coexistence of Al, Fe phase and Zn-rich phase, leading to macroscopic cracks caused by liquid metal embrittlement (LME). Therefore, the holding time is set at $2.7\times$[Al]/[Zn] or less.

**Description of the Drawings**

Fig.1 is a photograph of the microstructure of the steel in Example 1 of the present disclosure before hot stamping.

Fig.2 is a photograph of the microstructure of the steel in Example 1 of the present disclosure after hot stamping.

Fig.3 is a photograph of the microstructure of the steel in Example 2 of the present disclosure after hot stamping.

Fig.4 is a photograph of the microstructure of the steel in Example 5 of the present disclosure after hot stamping.

Fig.5 is a photograph of the microstructure of the steel in Example 6 of the present disclosure after hot stamping.

Fig.6 is a cross-sectional morphology of the steel in Example 8 of the present disclosure after hot stamping.

Fig.7 shows the cross-sectional morphology of LME features and the clad layer of Comparative Example 4 after hot stamping at high magnification.

Fig.8 shows the cross-sectional morphology of location A in Fig. 7 of the Comparative Example at high magnification.

Fig.9 shows the cross-sectional morphology of location B in Fig. 7 of the Comparative Example at high magnification.

**Detailed Description**

In order to make the purpose, technical solution and advantages of the present disclosure clear, the embodiment of the present disclosure will be further described in detail below in conjunction with the accompanying drawings.

The present disclosure relates a hot-stamped steel plate with an Al-Zn-Mg-Si clad layer which comprises a substrate and an Al-Zn-Mg-Si clad layer plated on the substrate. The initial structure of the Al-Zn-Mg-Si clad layer before hot-stamping is composed of a Zn-rich phase, an Al-rich phase, a FeAl$_3$ phase, a MgSi$_2$ phase and a Fe-Al-Si alloy layer and the thickness of the Al-Zn-Mg-Si clad layer is 8-30um. After hot-stamping, the clad layer is composed of two structures in the thickness direction, namely, the oxide layer of the surface layer and the alloy layer under the surface layer, wherein the alloy layer has a thickness of 15~45um, wherein the microstructure of the alloy layer has a relationship with the holding time t in the austenitization process as follows:

(1) when the holding time t is $\leq$3min, the alloy layer of the Al-Zn-Mg-Si clad layer is composed of an upper layer and a lower layer, wherein the first layer is composed of an Al-rich phase, a Zn-rich phase and a FeAl$_3$ phase, and the volume percentage of the sum of the Zn-rich phase and the FeAl$_3$ phase is between 20% and 80%; wherein the second layer is composed of a FeAl$_3$ phase and a Zn-rich phase, and the volume percentage of the Zn-rich phase relative to the total structures does not exceed 5%;

(2) when the holding time t is >3min, the alloy layer of the Al-Zn-Mg-Si clad layer is composed of a single alloy layer which mainly comprises a FeAl$_3$ phase as well as a Zn-rich phase and a MgZn$_2$ phase in the FeAl$_3$ phase, and the volume percentage of the sum of the Zn-rich phase and the MgZn$_2$ phase relative to the total structures is 5%~50%.

In the hot-stamped steel plate with an Al-Zn-Mg-Si clad layer of the present disclosure, the Al-Zn-Mg-Si clad layer has a chemical composition based on mass percentage of Al: 45-65%, Mg: 0.2-5%, Si: 0.1-3%, and a balance of Zn and other unavoidable impurities.

In the hot-stamped steel plate with an Al-Zn-Mg-Si clad layer of the present disclosure, the oxide layer on the surface of the clad layer of the steel plate after hot stamping contains oxides of Zn, Al, Mg, Si, and the thickness of the oxide layer of the clad layer is 3um or less. Oxides of Zn, Al, Mg,

Si refer to a mixture of zinc oxide, aluminum oxide, magnesium oxide and silicon oxide.

In the hot-stamped steel plate with an Al-Zn-Mg-Si clad layer of the present disclosure, the substrate has a composition based on mass percentage of C: 0.1%~0.5%; Si: 0.05%~2.0%; Mn: 0.5%~3.0%; P: ≤0.1%; S: ≤0.05%; Al: 0.01-0.05%; N: 0.01% or less; and further comprises at least one of Nb: 0.01%~0.1%, V: 0.01%~1.0%, Mo: 0.01%~1.0%, Ti: 0.01%~0.1%, Cr: 0.01%~1.0%, Ni: 0.01%~1.0% and B: 0.001%~0.01%, and a balance of Fe and other unavoidable impurities.

The hot stamped steel plate with an Al-Zn-Mg-Si clad layer for hot stamping and forming is produced as follows:

1) smelting the raw material for producing the steel plate;
2) providing a casting billet by continuous casting;
3) hot rolling: the rolling is controlled after the casting billet is heated to 1100~1250 °C, wherein the initial rolling temperature is 950-1150 °C, the final rolling temperature is 750-900 °C, and the thickness of the hot-rolled plate is less than or equal to 20mm;
4) coiling at 500~850°C after rolling, wherein the structure is ferrite and pearlite after it is cooled to room temperature;
5) pickling to remove the iron oxide scale produced during hot rolling;
6) cold rolling: wherein the steel coil is cold rolled to a thickness of 2.0mm or less, and the cold rolling reduction rate is ≥ 35%;
7) continuous annealing and hot dipping: the resulting cold rolled strip steel without annealing is uncoiled, washed, heated to a soaking temperature of 780~850°C and held for 30~200s, wherein the heating rate is 1~20°C/s, the atmosphere of the heating section and the holding section is a mixed gas of $N_2$ and $H_2$, wherein the volume content of $H_2$ is 0.5-20%, and the dew point of the annealing atmosphere is -40~10 °C; then the steel plate is rapidly cooled and immersed in a zinc pot for hot-dipping, wherein the bath temperature is in the range of 565~605°C; the steel plate is cooled in stages after it leaves the bath to obtain a plated steel plate. That is, the substrate is plated with an Al-Zn-Mg-Si clad layer.

In the production of the hot-stamped steel plate, the bath temperature in Step 7) is controlled at 565-605 °C. It is because when the bath temperature is lower than 565 °C, the fluidity of the bath in the zinc pot is reduced, and the thickness control of the clad layer becomes difficult. This makes it difficult to ensure the uniformity of the clad layer, especially when the thickness of the clad layer is thinner. When the zinc pot temperature is higher than 605°C, the dissolution of the steel plate in the zinc pot and the bath oxidation on the surface of the zinc pot will be intensified, which will lead to the increase of the bottom slag and surface slag in the bath during hot-dipping. In addition, if the bath temperature is higher than 605°C, the evaporation of Zn in the hot-dipping device, such as the furnace grate, will be intensified, resulting in the increase of defects such as zinc ash on the surface of the steel plate.

In particular, the present disclosure clearly defines the different phase composition of the clad layer structure of the steel plate with a clad layer after hot stamping under different holding times. This is because the inventors have found that the composition of each phase in the microstructure of the clad layer has the greatest relationship with the holding time in the austenitization process, and the composition of different phases in the clad layer after hot stamping has a great influence on its subsequent corrosion resistance. Therefore, on the basis of a large number of experiments, combined with the subsequent hot stamping methods, the present disclosure also defines the hot stamping method for producing the structure with optimal corrosion resistance.

The present disclosure also relates to a hot stamping method suitable for the hot stamped steel plate with an Al-Zn-Mg-Si clad layer, so that the steel plate is austenitized, then subjected to hot stamping and in-mold quenching within a limited process range, and the hot stamped parts have good corrosion resistance. The hot stamping method comprises a step of austenitization and a step of hot stamping and in-mold quenching:

The step of austenitization: the steel plate as a substrate is delivered to a heating furnace with a temperature higher than Ac3, so as to fully austenitize the steel plate, and held;

The step of hot stamping and in-mold quenching: the heated steel plate is quickly moved to a hot stamping mold for stamping and quenching, wherein a blank is formed after the hot stamping is completed, and the blank is first hardened and cooled in the mold, and then cooled to room temperature in the mold, or cooled to room temperature after being removed from the mold.

In the above-mentioned austenitization step, the heating temperature and heating time of the steel plate for hot stamping forming were specified in detail, because the inventors found through a large number of studies that the heating temperature and holding time in the austenitization process affect the microstructure of the clad layer after heating, thereby affecting the corrosion resistance of the material. If the heating temperature is lower than the Ac3 temperature of the steel plate, the steel plate cannot enter the single-phase austenitic zone and cannot complete the martensite transformation during the subsequent hardening process. Al-Fe diffusion will occur first in the heating process. At this time, the Zn-rich phase ($\eta$-Zn) and $MgZn_2$ phase in the initial clad layer will concentrate in the surface layer at 1/3~1/2 thickness of the clad layer. When the double-layer alloy phase structure comprising the surface layer composed of Zn-rich phase ($\eta$-Zn), $MgZn_2$ phase and Al-rich phase and the interface layer composed of $AlFe_3$ phase is in the corrosive medium, due to the lower potential of the Zn-rich phase or $MgZn_2$ phase in the surface layer, it can form a galvanic cell with the interface alloy layer or the matrix, so as to play a role of sacrificial anode protection for the matrix. If the heating temperature is too high, due to the driving force of Zn-Fe diffusion after Al-Fe is fully diffused, the Zn-rich phase in the clad layer will diffuse into the grain boundary of $AlFe_3$ phase, so that the corrosion resistance of the clad layer is significantly reduced. Therefore, the heating temperature in the present disclosure is controlled at 930 °C or less, but higher than the Ac3 temperature.

In the above-mentioned austenitization step, the holding time of the steel plate for hot stamping in austenitization is controlled at 1 min to 7 min. The holding time in austenitization is specified in detail, and its basic principle is the same as that of the selection of the above heating temperature. If the holding time is less than 1 min, the steel plate cannot be completely austenitized. If the holding time is too long, the clad layer will convert to a single alloy layer structure with coexistence of an $AlFe_3$ phase and a Zn-rich phase, resulting in reduced corrosion resistance. Therefore, the holding time is set at 7 min or less. Further, it is recommended to control the holding time no more than 3 min.

In addition, in order to avoid substrate cracks caused by local stress and liquid metal embrittlement (abbreviated as LME) during the hot forming process of the steel plate with an Al-Zn-Mg-Si clad layer, the inventors intensively study the hot stamping method suitable for the hot stamped steel plate with an Al-Zn-Mg-Si clad layer, of which the purpose is that after the steel plate is heated under the heating temperature and holding time as specified, it is subjected to hot stamping and in-mold quenching, so as to avoid substrate cracks. The operation steps of the hot stamping method are as follows:

(1) heating: delivering the steel plate with an Al-Zn-Mg-Si clad layer to a heating furnace, wherein the steel plate is heated to a temperature $T_{Ac3}$ which is higher than Ac3 at a heating rate V greater than or equal to 5°C/s and less than or equal to 1000°C/s. There are a variety of heating ways, which are conventional technologies. The heating temperature T is required to satisfy the following relation:

$$T_{Ac3} < T < 1.03 T_{Ac3} + 2 \times \frac{[Al]}{[Zn]} \times V$$

wherein [Al] is the Al content % in the clad layer, [Zn] is the Zn content % in the clad layer, V is the heating rate in a unit of °C/s during heating;

(2) holding: holding the austenitized steel plate, wherein the holding time t is set to satisfy the following equation:

$$1 < t < 2.7 \times \frac{[Al]}{[Zn]}$$

wherein [Al] is the Al content % in the clad layer, [Zn] is the Zn content % in the clad layer, in a unit of min;
(3) hot stamping and in-mold quenching: quickly moving the heated steel plate to a hot stamping mold for stamping and quenching, wherein a blank is formed after the hot stamping is completed, and the blank is first hardened and cooled in the mold, and then cooled to room temperature in the mold, or cooled to room temperature after being removed from the mold. In this step, the stamping force of the hot stamping is set at 300~1000 tons, and the holding time is set at 3~15 seconds

The hot stamped steel plate with an Al-Zn-Mg-Si clad layer with excellent corrosion resistance and the hot stamping method therefor of the present disclosure will be further explained and illustrated with reference to the accompanying drawings and following Examples.

The substrates of the hot stamped steel plates in the following Example 1-13 and Comparative Example 1-5 have the elemental composition as follows (mass%):

| C | Si | Mn | P | S | Al | Cr | Ti | B | N |
|---|---|---|---|---|---|---|---|---|---|
| 0.22 | 0.19 | 1.14 | 0.006 | 0.0001 | 0.05 | 0.25 | 0.031 | 0.0025 | 0.0040 |

The balance is Fe and other unavoidable impurities.
These hot stamped steel plates were produced as follows:

1) the raw materials for producing the steel plate comprising the above components were subjected to smelting;

2) a casting billet was provided by continuous casting;

3) hot rolling: the rolling was controlled after the casting billet was heated to 1100~1250 °C, wherein the initial rolling temperature was 1050 °C, the final rolling temperature was 880 °C, and the thickness of the hot-rolled plate was less than or equal to 20mm;

4) the plate was coiled at 550°C after rolling, wherein the structure was ferrite and pearlite after it was cooled to room temperature;

5) the plate was subjected to pickling to remove the iron oxide scale produced during hot rolling;

6) cold rolling: the steel coil was cold rolled to a thickness of 2.0mm or less, and the cold rolling reduction rate was $\geq$ 35%;

7) continuous annealing and hot dipping;

The above steel plate was further processed to form a clad layer for the hot-stamped steel plates. The process was as follows:

1) substrate pretreatment: the 1.2 mm thick, cold rolled strip steel without annealing was used as the substrate, and after being degreased, it was hold at 780 °C for 120s, wherein the atmosphere of the heating section and the holding section is a mixed gas of $N_2$ -5%$H_2$, and the dew point of the annealing atmosphere is -40 °C.

2) the substrate was immersed in a bath for hot-dipping, wherein the bath temperature was in the range of 565~605°C. The chemical compositions of the bath used in each example are listed in Table 1.

3) after dipping for 3 seconds, the steel plate left the bath. The thickness of the clad layer was controlled by air knife purge intensity. Then the steel plate was cooled in stages. In the range of the temperature at which it left the bath to 480°C, the cooling rate of the steel plate was controlled at 15~25°C/s; in the range of 480~280°C, the cooling rate of the steel plate was controlled at 40~60°C/s; after it was cooled to 280°C or lower, the steel plate was cooled to room temperature in a water quenching tank.

(8) the steel plate with an Al-Zn-Mg-Si clad layer in different compositions and ratios produced by the above steps was blanked, and the blank was transferred to a heating furnace with a temperature higher than the austenitizing temperature of the steel plate (i.e., Ac3 temperature);

(9) the steel plate with the clad layer was rapidly transferred to a mold for hot stamping and hardening.

The heating temperature and holding time of hot stamping are shown in Table 1 and 2, respectively.

Example 1-7 and Comparative Example 1-3

The steel plate with an AlSi clad layer of Comparative Example 1, the hot stamped steel plate with a pure zinc clad layer of Comparative Example 2, and the steel plate without a clad layer of Comparative Example 3 listed in Table 1 were heated to 930°C and held for 3 min, then transferred to a mold for hot stamping and hardening, respectively.

The steel plates of Example 1-7 and Comparative Example 1-3 were sampled. The surface structure of the clad layer was analyzed by Zeiss scanning electron microscope, and the proportion of phase structure was analyzed by EBSD. Electrochemical tests were performed on the Gamry Reference 600 potentiostat to determine the self-corrosion potential of each steel plate. The reference electrode was a saturated calomel electrode, the auxiliary electrode was a platinum electrode, and the sample was a working electrode with a test area of 1 $cm^2$. The test was performed in a 3.5 wt% NaCl solution at room temperature. Before the test, the working electrode was fixed and soaked in the electrolyte for 30min to obtain a stable open-circuit potential. The self-corrosion potential of the clad layer was calculated by Tafel fit of the obtained potentiodynamic polarization curves with the Gamry Echem Analyst software for the potentiostat.

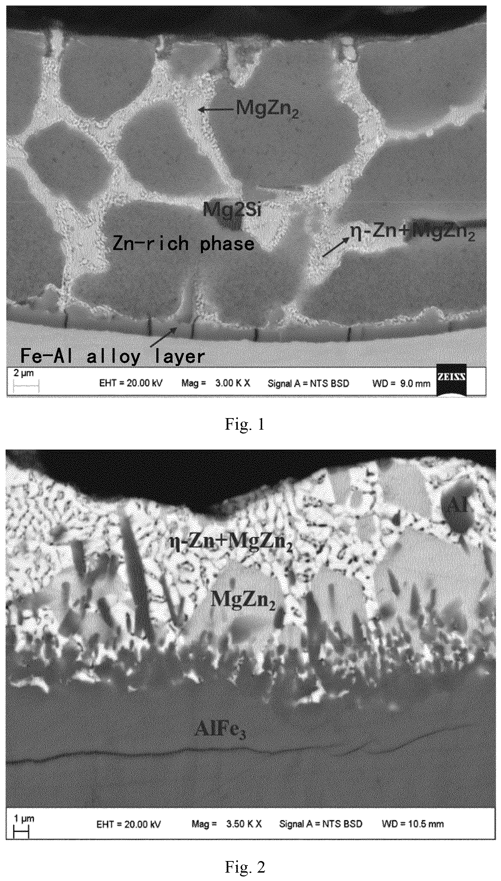

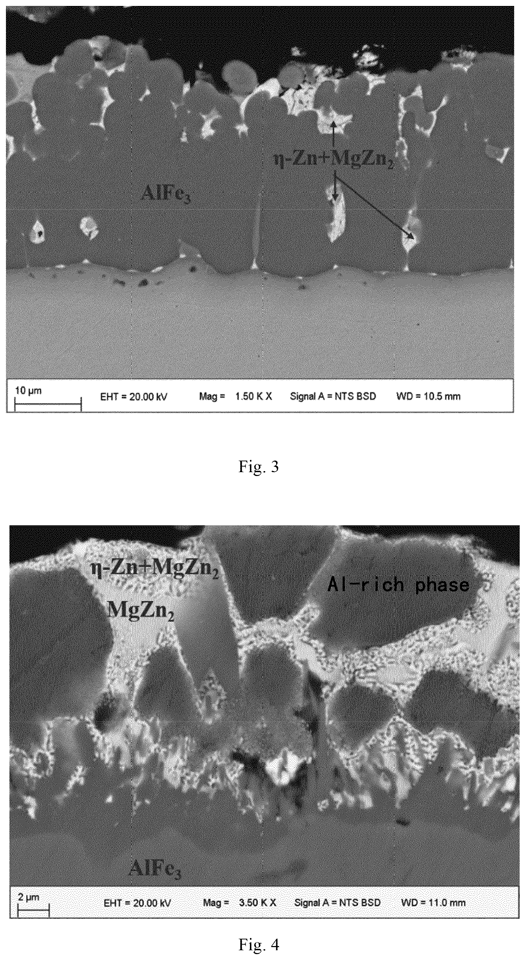

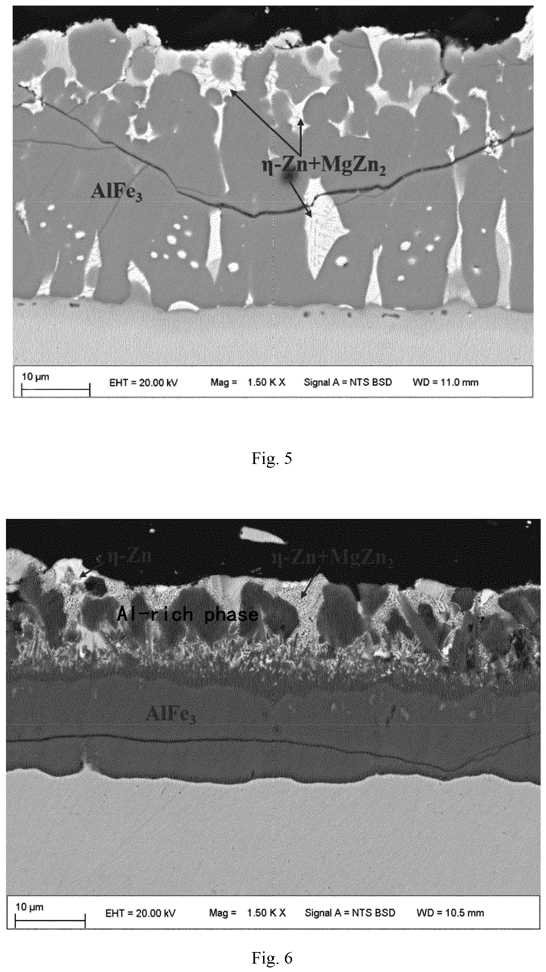

Fig.1 is a photograph of the microstructure of the steel plate with a clad layer in Example 1 of the present disclosure before hot stamping. As shown in Fig. 1, the microstructure of the clad layer before hot stamping is composed of a Zn-rich phase, an Al-rich phase, a Mg-Zn alloy phase, a Mg-Si alloy phase and a Fe-Al-Si alloy phase. Fig.2 is a photograph of the microstructure of the steel plate with a clad layer in Example 2 of the present disclosure after the steel plate was heated at 930°C and held for 3 min. As shown in Fig.2, the clad layer is composed of two layers, wherein the first layer is 80% $\eta$-Zn+MgZn$_2$ and 20% AlFe$_3$, and the second layer is 2% $\eta$-Zn+MgZn$_2$ and 98% AlFe$_3$. Fig.3 is a photograph of the microstructure of the steel plate with a clad layer in Example 3 of the present disclosure after the steel plate was heated at 930°C and held for 7 min. As shown in Fig.3, it can be seen that with the increase of holding time, the clad layer is transformed from two layers to a single layer, i.e., the clad layer is composed of 20% $\eta$-Zn+MgZn$_2$ and 80% AlFe$_3$. Fig.4 is a photograph of the microstructure of the steel plate with a clad layer in Example 6 of the present disclosure after the steel plate was heated at 900°C and held for 3 min. As shown in Fig.4, the clad layer is composed of two layers, wherein the first layer is 43% $\eta$-Zn+MgZn$_2$, 37% Al-rich phase and 20% AlFe$_3$ phase, and the second layer is 100% AlFe$_3$. Fig.5 is a photograph of the microstructure of the steel plate with a clad layer in Example 7 of the present disclosure after the steel plate was heated at 900°C and held for 7 min. As shown in Fig.5, the clad layer is also transformed from two layers to 35% $\eta$-Zn+MgZn$_2$ phase and 65% AlFe$_3$ phase. The phase proportions of the microstructure in Fig.1 to 5 are all determined with EBSD.

Table 1: phase structure in the clad layer and surface potential of Example 1-7 and Comparative Example 1-3

| | Ingredient in the clad layer | | | | phase structure proportion in the clad layer /% | | | | | Heating temperature (°C) | Holding time (min) | heating rate V °C/s | Surface potential (mV) |
|---|---|---|---|---|---|---|---|---|---|---|---|---|---|
| | | | | | The first layer | | | The second layer | | | | | |
| | Zn | Al | Mg | Si | $\eta$-Zn+MgZn$_2$ | Al | AlFe$_3$ | $\eta$-Zn+MgZn$_2$ | AlFe$_3$ | | | | |
| Ex. 1 | 42.5 | 55 | 2.3 | 1.2 | 80 | - | 20 | 2 | 98 | 930 | 3 | 5 | -1117 |
| Ex. 2 | 42.5 | 55 | 2.3 | 1.2 | - | - | - | 20 | 80 | 930 | 7 | 50 | -951 |
| Ex. 3 | 39.2 | 53 | 5.0 | 2.8 | 36 | 43 | 21 | - | 100 | 850 | 3 | 15 | -1097 |
| Ex. 4 | 52.4 | 45 | 2.1 | 0.5 | 50 | 36 | 14 | - | 100 | 880 | 3 | 15 | -1013 |
| Ex. 5 | 35.3 | 60 | 1.7 | 3.0 | 42 | 49 | 9 | - | 100 | 910 | 1 | 20 | -1105 |
| Ex. 6 | 33.9 | 65 | 0.2 | 0.9 | 43 | 37 | 20 | - | 100 | 900 | 3 | 15 | -1145 |
| Ex. 7 | 33.9 | 65 | 0.2 | 0.9 | - | - | - | 35 | 65 | 900 | 7 | 20 | -947 |
| CEx. 1 | - | 87 | - | 13 | AlSi clad layer | | | | | 930 | 3 | 20 | -505 |
| CEx. 2 | 100 | - | - | - | GI clad layer | | | | | 930 | 3 | 20 | -772 |
| CEx. 3 | No clad layer | | | | - | | | | | 930 | 3 | 20 | -531 |
| Note: "-" in the Table represents the content is 0. | | | | | | | | | | | | | |

According to Table 1, it can be seen that, compared with Example 1-7 of the present disclosure, the self-corrosion potentials of the hot-stamped steel plate of Comparative Example 1-3 are higher than those of the inventive Examples. Especially when compared with the substrate without a clad layer of Comparative Example 3 (-53 1mV), it is found that the potential of the traditional AlSi clad layer is higher (-505mV). Thus, once it is in the corrosive medium, the substrate will corrode earlier than the AlSi clad layer, leading to failure of the clad layer protection. The hot-stamped steel plate with a pure zinc clad layer of the Comparative Example 2 has a potential of -772mV, which is lower than that of the substrate without a clad layer. It can effectively form galvanic cells, thus playing a protective role of sacrificial anode. However, compared with Example 1-7 of the present disclosure, its potential is still higher. Therefore, the steel plates with the clad layer in the inventive Examples of the present disclosure have a better corrosion resistance for protecting the substrate after hot stamping. It should be noted that in the case of shorter holding time for austenitization, its corrosion potential is the lowest, such as Example 1 (-1117mV), Example 3 (-1097mV), Example 4 (-1013mV), Example 5 (-1105mV), Example 6 (-1145mV), so it is recommended to use a shorter holding temperature.

Example 8-13 and Comparative Example 4-5

Based on the findings of the present disclosure, the contact between molten zinc and austenite must be avoided as much as possible in the molding stage, and the specific process of hot stamping process of the present disclosure was as follows:

(1) heating: the steel plate with an Al-Zn-Mg-Si clad layer was delivered to a heating furnace, wherein the steel plate or steel strip was heated to a temperature $T_{Ac3}$ higher than Ac3 at a heating rate V greater than or equal to 5°C/s and less than or equal to 1000°C/s, and the heating temperature T was required to satisfy the following relation:

$$T_{Ac3} < T < 1.03\, T_{Ac3} + 2 \times \frac{[Al]}{[Zn]} \times V$$

wherein [Al] was the Al content % in the clad layer, [Zn] was the Zn content % in the clad layer, V was the heating rate in a unit of °C/s during heating;
(2) holding: the austenitized steel plate was hold, wherein the holding time t was set to satisfy the following equation:

$$1 \le t < 2.7 \times \frac{[Al]}{[Zn]}$$

wherein [Al] was the Al content % in the clad layer, [Zn] was the Zn content % in the clad layer, in a unit of min;
(3) hot stamping and in-mold quenching: the heated steel plate was quickly moved to a hot stamping mold for stamping and quenching, wherein a blank was formed after the hot stamping was completed, and the blank was first hardened and cooled in the mold, and then cooled to room temperature in the mold, or cooled to room temperature after being removed from the mold.

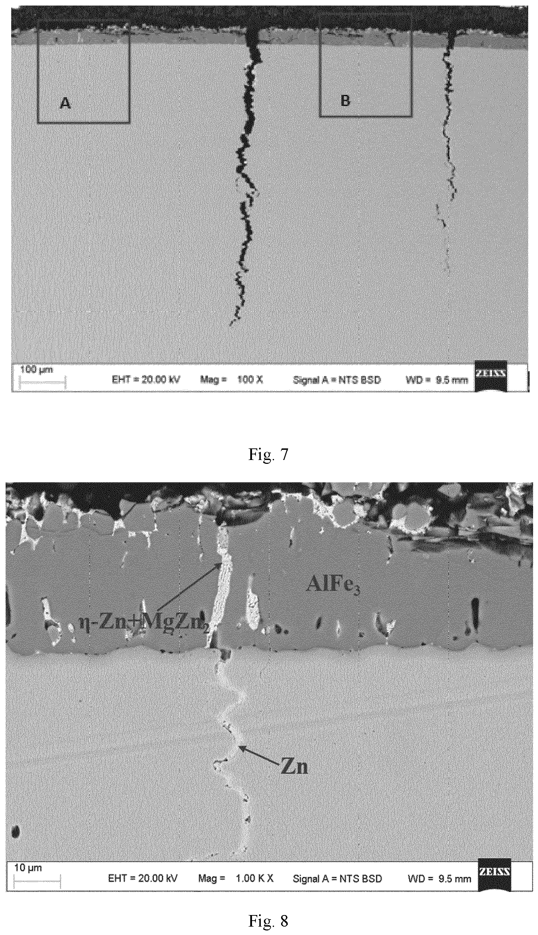

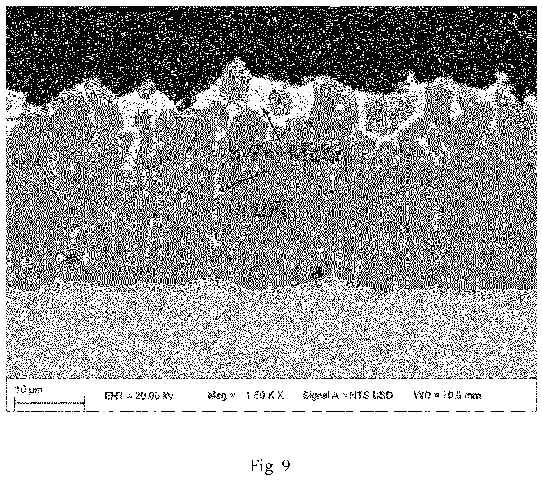

The steel plates of Example 8-13 and Comparative Example 4-5 were sampled. The LME cracks of the substrate was analyzed with the cross-sectional structure of the clad layer by Zeiss scanning electron microscope. Fig.6 shows the cross-sectional metallographic structure of the steel plate with a clad layer in Example 8 of the present disclosure after hot stamping. It can be seen that the substrate has no LME cracks. Fig.7 shows the cross-sectional metallographic structure of the steel plate with a clad layer in Comparative Example 4 of the present disclosure after hot stamping. LME cracks with a depth of about 700 $\mu$m can be found on the substrate. Fig.8 shows the morphology of location A in Fig. 7 at high magnification. It can be seen that the Zn-rich phase diffuses to the substrate. Fig.9 shows the morphology of location B in Fig. 7 at high magnification. It can be seen that the structure of the clad layer is obviously different from that of the inventive Example (Fig.6). The clad layer in the inventive Examples is a double layer structure comprising an $AlFe_3$ phase having a very high melting point close to the matrix and a Zn-rich phase clustered in the surface layer of the clad layer. But in the Comparative Examples, the Zn-rich phase having a low melting point is clustered at the $FeAl_3$ phase grain boundary. The main reason is that the Ac3 temperature of the corresponding designed substrate in the Comparative Example is 825°C, and the heating rate of the furnace is V=5°C/s. Based on the [Al]/[Zn] ratio of the bath composition in Table 2, it can be seen that the holding temperatures of Example 8-13 are in the range of $T_{Ac3} < T < 1.03\,T_{Ac3} + 2 \times V \times [Al]/[Zn]$ and the holding time is in the range of $1 \le t < 2.7 \times [Al]/[Zn]$, whereas the heating temperature and holding time of the Comparative Examples both exceed the range defined in the present disclosure, leading to severe LME cracks during hot stamping.

Table 2: Substrate LME comparison of Example 8-13 and Comparative Example 4-5

| | Ingredient in the clad layer (wt.%) | | | | Heating temperature /°C | Holding time /min | Heating rate V °C/s | Substrate LME |
|---|---|---|---|---|---|---|---|---|
| | Zn | Al | Mg | Si | | | | |
| Ex. 8 | 42.5 | 55 | 2.3 | 0.2 | 863 | 3 | 10 | O |
| Ex. 9 | 37.5 | 57 | 4.1 | 1.4 | 870 | 4 | 50 | O |
| Ex. 10 | 39.2 | 53 | 5.0 | 2.8 | 870 | 3 | 30 | O |
| Ex. 11 | 52.4 | 45 | 2.1 | 0.5 | 858 | 2 | 20 | O |
| Ex. 12 | 35.3 | 60 | 1.7 | 3.0 | 880 | 5 | 15 | O |
| Ex. 13 | 339 | 65 | 0.2 | 0.9 | 910 | 1 | 5 | O |
| CEx. 4 | 42.5 | 55 | 2.3 | 0.2 | 950 | 3 | 5 | △ |
| CEx. 5 | 39.2 | 53 | 5.0 | 2.8 | 900 | 8 | 5 | △ |
| Note: o represents no substrate LME cracks, △ represents there are LME cracks in the substrate. | | | | | | | | |

The hot stamping process of the present disclosure can avoid the matrix crack caused by Liquid Metal Embrittlement (LME) after the hot stamped steel plate with an Al-Zn-Mg-Si clad layer is stamped, and it is of great significance to the development of the hot stamped steel with an Al-Zn-Mg-Si clad layer.

Although the present disclosure has been illustrated and described by reference to some preferred embodiments, a person skilled in the art should understand that the above content is a further detailed description of the present disclosure in conjunction with the specific embodiments. It cannot be determined that the specific embodiment of the present disclosure is limited to these descriptions. A person skilled in the art may change it in forms and details, including making a number of simple deductions or substitutions, without deviating from the spirit and scope of the present disclosure.

## Claims

1. A hot-stamped steel plate with an Al-Zn-Mg-Si clad layer which comprises a substrate and an Al-Zn-Mg-Si clad layer plated on the substrate, wherein the Al-Zn-Mg-Si clad layer is composed of two structures in a thickness direction, namely, an oxide layer of the surface layer and an alloy layer under the surface layer, wherein the alloy layer has a thickness of 15~45um, wherein the alloy layer is composed of an upper layer and a lower layer structure, wherein the first layer of structure is composed of an Al-rich phase, a Zn-rich phase, a $MgZn_2$ phase and a $FeAl_3$ phase, and the volume percentage of the sum of the Zn-rich phase and the $FeAl_3$ phase is between 20% and 80%; wherein the second layer of structure is composed of a $FeAl_3$ phase, a $MgZn_2$ phase and a Zn-rich phase, and the volume percentage of the $MgZn_2$ phase and the Zn-rich phase does not exceed 5%; or
wherein the alloy layer is composed of a single alloy layer which mainly comprises a $FeAl_3$ phase as well as a Zn-rich phase and a $MgZn_2$ phase in the $FeAl_3$ phase, and the volume percentage of the sum of the Zn-rich phase and the $MgZn_2$ phase is 5%~50%.

2. The hot-stamped steel plate with an Al-Zn-Mg-Si clad layer according to claim 1, wherein the initial structure of the Al-Zn-Mg-Si clad layer of the steel plate before hot stamping is composed of a Zn-rich phase, an Al-rich phase, a $FeAl_3$ phase, a $MgSi_2$ phase and a Fe-Al-Si alloy layer, and the thickness of the Al-Zn-Mg-Si clad layer is 8-30um.

3. The hot-stamped steel plate with an Al-Zn-Mg-Si clad layer according to claim 1, wherein the oxide layer contains Zn oxide, Al oxide, Mg oxide, and Si oxide, and the thickness of the oxide layer is no more than 3um.

4. The hot-stamped steel plate with an Al-Zn-Mg-Si clad layer according to claim 1, wherein the alloy layer is composed of an upper layer and a lower layer structure, wherein the first layer of structure is composed of an Al-rich phase, a Zn-rich phase, a $MgZn_2$ phase and a $FeAl_3$ phase, and the volume percentage of the sum of the Zn-rich phase, the $MgZn_2$ phase and the $FeAl_3$ phase is between 50% and 100%; wherein the second layer of structure is composed of a $FeAl_3$ phase, a $MgZn_2$ phase and a Zn-rich phase, and the volume percentage of the $MgZn_2$ phase and the Zn-rich phase does not exceed 5%.

5. The hot-stamped steel plate with an Al-Zn-Mg-Si clad layer according to any one of claims 1-3, wherein the alloy layer is composed of a single alloy layer which mainly comprises a $FeAl_3$ phase as well as a Zn-rich phase and a $MgZn_2$ phase in the $FeAl_3$ phase, and the volume percentage of the sum of the Zn-rich phase and the $MgZn_2$ phase is 15% ~40%.

6. The hot-stamped steel plate with an Al-Zn-Mg-Si clad layer according to any one of claims 1-5, wherein the Zn-rich phase and MgZn2 phase concentrate at 1/3~1/2 thickness of the clad layer.

7. The hot-stamped steel plate with an Al-Zn-Mg-Si clad layer according to any one of claims 1-6, wherein the Al-Zn-Mg-Si clad layer has a chemical composition based on mass percentage of Al: 45-65%, Mg: 0.2-5%, Si: 0.1-3%, and a balance of Zn and other unavoidable impurities; preferably, the Al-Zn-Mg-Si clad layer has a chemical composition based on mass percentage of Al: 45-65%, Mg: 0.2-5%, Si: 0.5-3%, and a balance of Zn and other unavoidable impurities.

8. The hot-stamped steel plate with an Al-Zn-Mg-Si clad layer according to any one of claims 1-7, wherein the substrate has a composition based on mass percentage of C: 0.1%~0.5%; Si: 0.05%~2.0%; Mn: 0.5%~3.0%; P: ≤0.1%; S: ≤0.05%; Al: 0.01-0.05%; N: 0.01% or less; and further comprises at least one of Nb: 0.01%~0.1%, V: 0.01%~1.0%, Mo: 0.01%~1.0%, Ti: 0.01%~0.1%, Cr: 0.01%~1.0%, Ni: 0.01%~1.0% and B: 0.001%~0.01%, and a balance of Fe and other unavoidable impurities.

9. The hot-stamped steel plate with an Al-Zn-Mg-Si clad layer according to claim 8, wherein the substrate has a composition based on mass percentage of C: 0.1%~0.3%; Si: 0.05-0.3%; Mn: 0.8-1.5%; P: ≤0.01%; S: ≤0.0005%; Al: 0.01-0.05%; N: 0.01% or less; and further comprises at least one of Nb: 0.01%~0.1%, V: 0.01%~1.0%, Mo: 0.01% ~1.0%, Ti: 0.01%~0.1%, Cr: 0.1-0.4%, Ni: 0.01%~1.0% and B: 0.001%~0.01%, and a balance of Fe and other unavoidable impurities.

10. The hot-stamped steel plate with an Al-Zn-Mg-Si clad layer according to claim 8, wherein the substrate has a composition based on mass percentage of C: 0.1%~0.3%, Si: 0.05-0.3%, Mn: 0.8-1.5%, P: ≤0.01%, S: ≤0.0005%, Al: 0.01-0.05%, N: 0.01% or less, Ti: 0.01%~0.1%, Cr: 0.1-0.4%, and B: 0.001%~0.01%, and a balance of Fe and unavoidable impurities.

11. A hot stamping method for the hot stamped steel plate with an Al-Zn-Mg-Si clad layer, wherein the operation steps of the hot stamping method are as follows:

(1) heating: delivering the steel plate with an Al-Zn-Mg-Si clad layer to a heating furnace, wherein the steel plate is heated to a temperature $T_{Ac3}$ which is higher than Ac3 at a heating rate V greater than or equal to 5°C/s and less than or equal to 1000°C/s, and wherein the heating temperature T is required to satisfy the following relation:

$$T_{Ac3} < T < 1.03 T_{Ac3} + 2 \times \frac{[Al]}{[Zn]} \times V$$

wherein [Al] is the Al content % in the clad layer, [Zn] is the Zn content % in the clad layer, V is the heating rate in a unit of °C/s during heating;

(2) holding: holding the austenitized steel plate, wherein the holding time t is set to satisfy the following equation:

$$1 < t < 2.7 \times \frac{[Al]}{[Zn]}$$

wherein [Al] is the Al content % in the clad layer, [Zn] is the Zn content % in the clad layer, in a unit of min;

(3) hot stamping and in-mold quenching: quickly moving the heated steel plate to a hot stamping mold for stamping and quenching, wherein a blank is formed after the hot stamping is completed, and the blank is first hardened and cooled in the mold, and then cooled to room temperature in the mold, or cooled to room temperature after being removed from the mold.

12. The hot stamping method for the hot stamped steel plate with an Al-Zn-Mg-Si clad layer according to claim 11, wherein:

the austenitization temperature of the hot stamped steel plate in Step (1) is controlled at 930 °C or less, and higher than the Ac3 temperature; and/or

the holding time for austenitization of the hot stamped steel plate in Step (2) is controlled between 1 min and 7 min, or the holding time is controlled at more than 1 min and less than 3 min; and/or

the holding time of the hot stamping in Step (3) is 3~15 seconds, and the stamping force is 300~1000 tons.

13. The hot stamping method for the hot stamped steel plate with an Al-Zn-Mg-Si clad layer according to claim 11, wherein the Al-Zn-Mg-Si clad layer has a chemical composition based on mass percentage of Al: 45-65%, Mg: 0.2-5%, Si: 0.5-3%, and a balance of Zn and other unavoidable impurities.

14. The hot stamping method for the hot stamped steel plate with an Al-Zn-Mg-Si clad layer according to claim 11, wherein the substrate of the hot stamped steel plate has a composition based on mass percentage of C: 0.1%~0.5%; Si: 0.05% ~2.0%; Mn: 0.5%~3.0%; P: ≤0.1%; S: ≤0.05%; Al: 0.01-0.05%; N: 0.01% or less; and further comprises at least one of Nb: 0.01%~0.1%, V: 0.01%~1.0%, Mo: 0.01%~1.0%, Ti: 0.01%~0.1%, Cr: 0.01%~1.0%, Ni: 0.01%~1.0%, B: 0.001% ~0.01%, and a balance of Fe and unavoidable impurities; preferably, the substrate has a composition based on mass percentage of C: 0.1%~0.3%; Si: 0.05-0.3%; Mn: 0.8-1.5%; P: ≤0.01%; S: ≤0.0005%; Al: 0.01-0.05%; N: 0.01% or less; and further comprises at least one of Nb: 0.01%~0.1%, V: 0.01%~1.0%, Mo: 0.01%~1.0%, Ti: 0.01%~0.1%, Cr: 0.1-0.4%, Ni: 0.01%~1.0%, B: 0.001%~0.01%, and a balance of Fe and unavoidable impurities; more preferably, the substrate has a composition based on mass percentage of C: 0.1%~0.3%, Si: 0.05-0.3%, Mn: 0.8-1.5%, P: ≤0.01%, S: ≤0.0005%, Al: 0.01-0.05%, N: 0.01% or less, Ti: 0.01%~0.1%, Cr: 0.1-0.4%, and B: 0.001%~0.01%, and a balance of Fe and unavoidable impurities.

15. The hot stamping method for the hot stamped steel plate with an Al-Zn-Mg-Si clad layer according to claim 11, wherein the hot stamped steel plate with an Al-Zn-Mg-Si clad layer is prepared by the process comprising the following steps:

 1) smelting the raw material for producing the steel plate;
 2) providing a casting billet by continuous casting;
 3) hot rolling: the rolling is controlled after the casting billet is heated to 1100~1250 °C, wherein the initial rolling temperature is 950~1150 °C, the final rolling temperature is 750~900 °C, and the thickness of the hot-rolled plate is less than or equal to 20mm;
 4) coiling at 500~850°C after rolling, wherein the structure is ferrite and pearlite after it is cooled to room temperature;
 5) pickling to remove the iron oxide scale produced during hot rolling;
 6) cold rolling: wherein the steel coil is cold rolled to a thickness of 2.0mm or less, and the cold rolling reduction rate is ≥ 35%;
 7) continuous annealing and hot dipping: the resulting cold rolled strip steel without annealing is uncoiled, washed, heated to a soaking temperature of 780~850°C and held for 30~200s, wherein the heating rate is 1~20°C/s, the atmosphere of the heating section and the holding section is a mixed gas of $N_2$ and $H_2$, wherein the volume content of $H_2$ is 0.5-20%, and the dew point of the annealing atmosphere is -40~10 °C; then the steel plate is immersed in a zinc pot for hot-dipping, wherein the bath temperature is in the range of 565~605°C; the steel plate is cooled in stages after it leaves the bath to obtain a plated steel plate with an Al-Zn-Mg-Si clad layer plated on the substrate;

preferably, the cooling in stages include: in the range of the temperature at which it leaves the bath to 480°C, the cooling rate of the steel plate is controlled at 15~25°C/s; in the range of 480~280°C, the cooling rate of the steel plate is controlled at 40~60°C/s; after it is cooled to 280°C or lower, the steel plate is cooled to room temperature in a water quenching tank.

Fig. 1

Fig. 2

Fig. 3

Fig. 4

Fig. 5

Fig. 6

Fig. 7

Fig. 8

Fig. 9

## INTERNATIONAL SEARCH REPORT

| | |
|---|---|
| | International application No. |
| | **PCT/CN2023/071554** |

**A. CLASSIFICATION OF SUBJECT MATTER**

C22C38/02(2006.01)i; B21D22/00(2006.01)i

According to International Patent Classification (IPC) or to both national classification and IPC

**B. FIELDS SEARCHED**

Minimum documentation searched (classification system followed by classification symbols)

IPC:C22C 38/-,B21D 22/-

Documentation searched other than minimum documentation to the extent that such documents are included in the fields searched

Electronic data base consulted during the international search (name of data base and, where practicable, search terms used)

CNTXT, CNABS, VEN, WPABS, 超星读秀, CHAOXING DUXIU, ENTXT: 铝, Al, 镁, Mg, 硅, Si, 热冲压, 钢, 淬火, 热浸镀, 保温, FeAl3, 氧化, 合金; Aluminum, Magnesium, Silicon, hot stamping, steel, quench+, hot dip plat+, soak+, oxidat+, alloy

**C. DOCUMENTS CONSIDERED TO BE RELEVANT**

| Category* | Citation of document, with indication, where appropriate, of the relevant passages | Relevant to claim No. |
|---|---|---|
| Y | CN 113564466 A (ANGANG STEEL CO., LTD.) 29 October 2021 (2021-10-29) description, paragraphs [0021]-[0031] | 1-15 |
| Y | CN 111618146 A (SHOUGANG GROUP CO., LTD. et al.) 04 September 2020 (2020-09-04) description, paragraphs [0037]-[0054] | 1-15 |
| A | CN 110475898 A (NIPPON STEEL CORP.) 19 November 2019 (2019-11-19) entire document | 1-15 |
| A | CN 102011082 A (SHANGHAI UNIVERSITY) 13 April 2011 (2011-04-13) entire document | 1-15 |
| A | CN 109112453 A (ANGANG STEEL CO., LTD.) 01 January 2019 (2019-01-01) entire document | 1-15 |
| A | CN 109402547 A (BAOSHAN IRON & STEEL CO., LTD.) 01 March 2019 (2019-03-01) entire document | 1-15 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 May 2023** | **03 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

<table>
<tr><td colspan="2" align="center"><strong>INTERNATIONAL SEARCH REPORT</strong><br>Information on patent family members</td><td colspan="2">International application No.<br><strong>PCT/CN2023/071554</strong></td></tr>
</table>

| Patent document cited in search report | | | Publication date (day/month/year) | Patent family member(s) | | | Publication date (day/month/year) |
|---|---|---|---|---|---|---|---|
| CN | 113564466 | A | 29 October 2021 | None | | | |
| CN | 111618146 | A | 04 September 2020 | None | | | |
| CN | 110475898 | A | 19 November 2019 | EP | 3604602 | A1 | 05 February 2020 |
| | | | | EP | 3604602 | A4 | 05 August 2020 |
| | | | | US | 2020032360 | A1 | 30 January 2020 |
| | | | | MX | 2019011731 | A | 21 November 2019 |
| | | | | RU | 2019134830 | A | 30 April 2021 |
| | | | | CA | 3057006 | A1 | 04 October 2018 |
| | | | | WO | 2018179395 | A1 | 04 October 2018 |
| | | | | JPWO | 2018179395 | A1 | 12 December 2019 |
| | | | | JP | 6819771 | B2 | 27 January 2021 |
| | | | | KR | 20190133754 | A | 03 December 2019 |
| | | | | BR | 112019019587 | A2 | 14 April 2020 |
| CN | 102011082 | A | 13 April 2011 | None | | | |
| CN | 109112453 | A | 01 January 2019 | None | | | |
| CN | 109402547 | A | 01 March 2019 | None | | | |

Form PCT/ISA/210 (patent family annex) (July 2022)

**EP 4 464 811 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1125965 A
- US 3505043 A
- US 3505042 A
- CN 100334250
- CN 103805930 B